(19) Europäisches Patentamt
European Patent Office
Office européen des brevets

(11) **EP 0 736 786 B1**

(12) **FASCICULE DE BREVET EUROPEEN**

(45) Date de publication et mention
de la délivrance du brevet:
**13.08.2003 Bulletin 2003/33**

(51) Int Cl.$^7$: **G02B 6/34**, G02B 6/12

(21) Numéro de dépôt: **96400708.2**

(22) Date de dépôt: **02.04.1996**

(54) **Filtre multilongeur d'onde insensible à la polarisation et procédé de réalisation**

Polarisationsunabhängiger Multi-Wellenlängen-Filter und Herstellungsprozess

Polarisation-independant multi-wavelength filter and manufacturing process

(84) Etats contractants désignés:
**DE GB**

(30) Priorité: **04.04.1995 FR 9503945**

(43) Date de publication de la demande:
**09.10.1996 Bulletin 1996/41**

(73) Titulaire: **ALCATEL**
**75382 Paris Cédex 08 (FR)**

(72) Inventeur: **Bruno, Adrien**
**91120 Palaiseau (FR)**

(74) Mandataire: **Lamoureux, Bernard et al**
**Compagnie Financière Alcatel**
**Département de Propriété Industrielle,**
**5, rue Noel Pons**
**92734 Nanterre Cedex (FR)**

(56) Documents cités:
**EP-A- 0 535 523**     **DE-A- 4 308 411**
**US-A- 5 243 669**

• **IEEE PHOTONICS TECHNOLOGY LETTERS, vol. 5, no. 6, 1 Juin 1993, NEW YORK US, pages 707-709, XP002005325 HIROSHI TAKAHASHI ET AL.: "Polarization-insensitive arrayed-waveguide wavelength multiplexer with birefringence compensating film"**
• **Optics Letters, Vol.17, no.7, avril 1992, pages 499-501**

## Description

La présente invention concerne le domaine technique général de l'opto-électronique et, plus précisément, un filtre multilongueur d'onde du type comprenant un faisceau de guides optiques réalisés sur un même substrat, agencés de manière à ce que la réponse en longueur d'onde du filtre dépende des déphasages subis par la lumière se propageant dans les guides.

Diverses approches technologiques ont été proposées pour obtenir l'indépendance à la polarisation d'un tel filtre multilongueur d'onde.

On peut citer à cet égard la publication "Polarization - insensitive arrayed-waveguide grating wavelength multiplexer on silicon", Optics Letters Vol. 17, No. 7, Avril 1992, pages 499-501.

Ainsi, on a proposé, comme rappelé dans l'article précité, une structure dans laquelle une lame de quartz demi-onde est placée à mi-chemin sur le faisceau de guides optiques pour permuter les modes de polarisation TE et TM.

On a proposé, dans l'article de Zirngibl et al. intitulé "Polarization-Independent 8 x 8 Waveguide Grating Multiplexer on InP" paru, dans Electronic Letters, Vol. 29, pages 201-202, Janvier 1993; d'utiliser des ordres différents pour les modes de polarisation TM et TE.

On peut également citer une méthode consistant à séparer spatialement les modes de polarisation TE et TM, proposée par M.R. Amersfoort et al. dans l'article intitulé "A phased-array wavelength demultiplexer with flattened wavelength response", paru dans Electronic Letters, Vol. 30, 1994.

On peut encore citer une méthode consistant à séparer spatialement les modes de polarisation TE et TM tout en considérant des ordres différents, proposée par Spiekmann et al. dans la publication "Polarization-Independent On peut citer à cet égart la publication "Polarization-Independent InP-Based Phased-Array Wavelength Demultiplexer with Flattened Wavelength Response" , Conférence ECOC 94.

Les méthodes connues précitées n'offrent pas entière satisfaction. La méthode consistant à rapporter une lame de quartz présente l'inconvénient d'entraîner des pertes de couplage entre cette dernière et les guides optiques, et les performances des méthodes qui utilisent des ordres différents pour les modes de polarisation TE et TM sont limitées en termes du nombre de canaux de longueurs d'ondes différentes pouvant être séparés par le filtre. Enfin, les méthodes jouant sur la géométrie des guides optiques pour modifier la biréfringence sont difficiles à mettre en oeuvre technologiquement.

La présente invention a pour objet de remédier aux inconvénients précités et propose un nouveau filtre multilongueur d'onde, insensible à la polarisation, qui soit de fabrication aisée, convienne à une intégration monolithique, et permette de réaliser le démultiplexage d'un grand nombre de canaux.

L'invention y parvient en proposant un filtre tel que défini à la revendication 1.

L'invention a encore pour objet un procédé de réalisation d'un tel filtre, tel que défini à la revendication 9.

D'autres caractéristiques et avantages de la présente invention apparaîtront à la lecture de la description détaillée qui va suivre, d'un exemple de réalisation non limitatif de l'invention, et à l'examen du dessin annexé sur lequel :

- la figure 1 est une vue d'ensemble, schématique, d'un filtre multilongueur d'onde à faisceau de guides optiques,
- la figure 2 est une vue en perspective, schématique et partielle, d'un filtre multilongueur d'onde conforme à l'invention, avec représentation d'une portion rectiligne de guide optique,
- la figure 3 est une vue schématique et partielle, en perspective, d'une portion courbe de guide optique,
- la figure 4 est une section transversale d'un guide optique selon le trait de coupe IV-IV de la figure 2,
- la figure 5 est une section transversale d'un guide optique selon le trait de coupe V-V de la figure 2,
- la figure 6 est une section transversale d'un guide optique selon le trait de coupe VI-VI de la figure 2,
- la figure 7 est une section transversale d'un guide optique selon le trait de coupe VII-VII de la figure 3,
- la figure 8 est une section transversale d'un guide optique selon le trait de coupe VIII-VIII de la figure 3, et
- la figure 9 est une section transversale d'un guide optique selon le trait de coupe IX-IX de la figure 2.

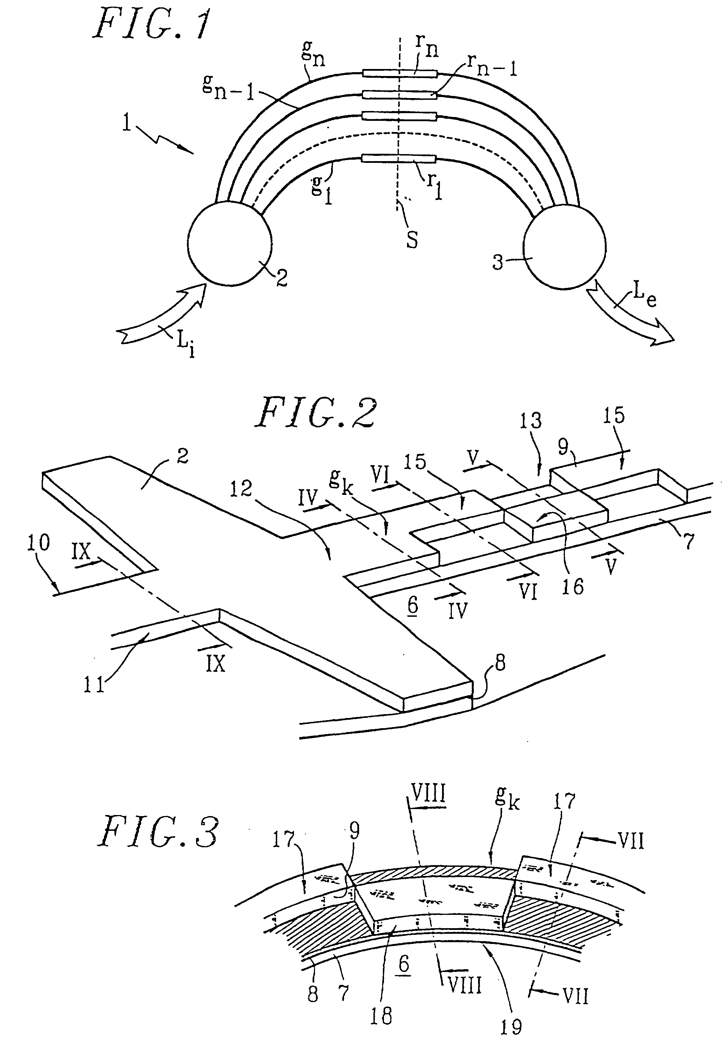

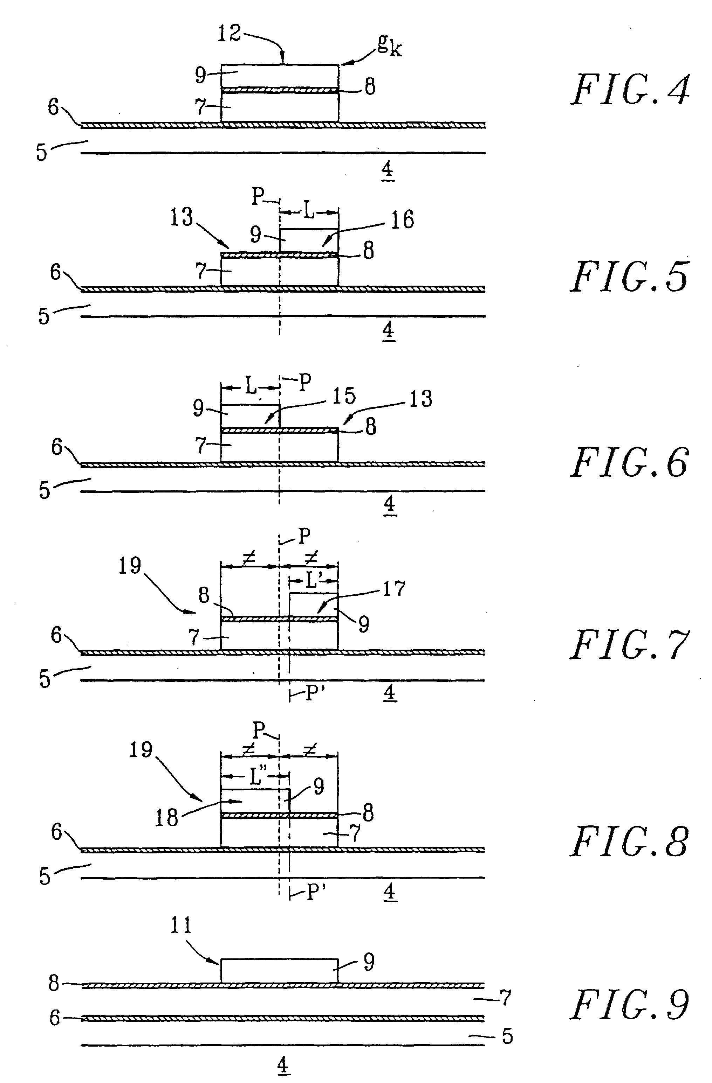

On a représenté de façon schématique sur la figure 1 un filtre multilongueur d'onde 1, comportant un faisceau de n guides optiques $g_1$, ..., $g_n$. Ces derniers relient deux zones d'expansion 2, 3, constituées dans l'exemple de réalisation décrit par des dioptres plans. Seule la zone d'expansion 2 est représentée en perspective sur la figure 2.

Le filtre 1 reçoit la lumière incidente $L_i$ par un guide optique 10 débouchant dans la zone d'expansion 2. La lumière $L_i$ est divisée en une pluralité d'ondes lumineuses se propageant respectivement dans les guides optiques $g_1$, ..., $g_n$. Ces ondes lumineuses se regroupent dans la zone d'expansion 3 où elles interfèrent. Les guides optiques $g_1$, ..., $g_n$ présentent des longueurs respectives croissantes et les chemins optiques parcourus par les ondes lumineuses dans les guides optiques $g_1$, ..., $g_n$ sont différents. Ces dernières subissent donc des déphasages produisant, après regroupement dans la zone d'expansion 3, des interférences selon le principe de l'interférométrie de Mach-Zender. La réponse du filtre en longueur d'onde permet ainsi de séparer plusieurs canaux de longueurs d'ondes respectives différentes, et le filtre trouve application comme démultiplexeur dans les réseaux de télécommunications optiques. Un ou plusieurs guide(s) optique(s) relie(nt) la zone d'expansion 3 à un ou plusieurs composants optoélectroniques récepteurs non représentés ou à des fibres optiques destinées à acheminer la lumière filtrée vers d'autres composants optiques ou optoélectroniques.

Des rotateurs de polarisation $r_1$, ..., $r_n$ sont placés sur le trajet de la lumière dans chacun des guides optiques $g_1$, ..., $g_n$ pour rendre égaux les chemins optiques parcourus respectivement par les modes de polarisation TE et TM, et obtenir l'insensibilité à la polarisation du filtre 1.

Ces rotateurs de polarisation $r_1$, $r_2$, ..., $r_n$ sont du type comprenant des moyens pour charger chaque guide optique de manière à créer une asymétrie de l'indice de réfraction effectif de ce dernier.

Le phénomène de rotation de polarisation obtenu en chargeant un guide optique de manière à créer une asymétrie de l'indice de réfraction effectif est connu en soi et a notamment été décrit par Y. Shani dans la publication "Applied Physics Letters" 59 (11), 9 Septembre 1991.

Dans l'exemple de réalisation décrit, les guides optiques $g_1$, ..., $g_n$ s'étendent chacun symétriquement de part et d'autre d'un plan médian de symétrie S pour le faisceau de guides. Ce plan s'étend à son intersection avec les guides perpendiculairement à la direction de propagation de la lumière.

Le filtre multilongueur d'onde 1 a été réalisé en déposant successivement par épitaxie en phase vapeur (MOCVD), en une seule étape, sur un substrat plan 4 en matériau binaire InP, une couche de confinement inférieure 5 en matériau binaire InP, de 1μm d'épaisseur, une première couche de guidage 6 en matériau quaternaire GaInAsP, de 0,1 μm d'épaisseur et de bande interdite correspondant à une longueur d'onde $\lambda_g$ égale à 1,3 μm, une couche de confinement intermédiaire 7 en matériau binaire InP, de 1 μm d'épaisseur, une deuxième couche de guidage 8 en matériau quaternaire GaInAsP, de 0,1 μm d'épaisseur et de bande interdite correspondant à une longueur d'onde $\lambda_g$ = 1,3 μm, et une couche de confinement supérieure 9 en matériau binaire InP, de 1 μm d'épaisseur. Les couches de guidage 6, 8 en matériau quaternaire InGaAsP ont chacune une épaisseur inférieure ou égale à 1500 Å et un indice de réfraction supérieur à celui des couches de confinement 5, 7 et 9. Compte tenu des valeurs qui précèdent, l'épaisseur totale des couches de confinement inférieure 5, de confinement intermédiaire 7, et de confinement supérieure 9 est de l'ordre de 3 μm.

Pour réaliser le guide optique 10 permettant d'amener la lumière incidente $L_i$ à la zone d'expansion 2, on grave la couche de confinement supérieure 9 pour former un ruban 11, de 4 μm de largeur dans l'exemple de réalisation décrit. La zone d'expansion 2 est réalisée par gravure de la couche de confinement supérieure 9 du côté du guide optique 10 et par gravure plus profonde jusqu'à la couche de guidage 6 du côté des guides optiques $g_1$, ..., $g_n$. De même, le ou les guide(s) optique(s) utilisé(s) pour guider la lumière quittant la zone d'expansion 3 est (sont) réalisé(s) par gravure de la couche de confinement supérieure 9 pour former un ou plusieurs ruban(s) de guidage. La zone d'expansion 3 est réalisée par gravure de la couche de confinement supérieure 9 du côté de ce(s) guide(s) optique(s) et par gravure plus profonde, jusqu'à la couche de guidage 6, du côté des guides optiques $g_1$, ..., $g_n$. Bien entendu, on ne sort pas du cadre de l'invention en réalisant plusieurs guides optiques pour amener la lumière à la zone d'expansion 2.

Les guides optiques $g_1$, ..., $g_n$ sont réalisés par enlèvement de la couche de confinement supérieure 9, de la couche de guidage 8 et de la couche de confinement intermédiaire 7. Cet enlèvement de matière se fait de façon connue en soi, par gravure sèche (RIE, RIBE ou IBE) dans l'exemple décrit.

Chaque guide $g_k$ du faisceau (k nombre entier compris entre 1 et n) présente des portions d'extrémité référencées 12 reliées aux zones d'expansion 2 et 3, et entre ces portions d'extrémité 12, des portions rectilignes référencées 13 et une ou plusieurs portions courbes 19 reliant lesdites portions rectilignes. La structure de chaque guide optique $g_k$ est du type "dilué", présente une biréfringence de l'ordre de $5 \cdot 10^{-3}$, la lumière se propageant avec un mode large dans les couches de guidage 6 et 8.

Pour réaliser un rotateur de polarisation $r_k$ sur une portion rectiligne 13 d'un guide $g_k$, on grave de façon particulière la couche de confinement supérieure 9. Plus précisément, comme représenté sur les figures 2, 5 et 6, la couche de confinement supérieure 9 est gravée de manière à réaliser une succession de motifs alternés 15 et 16 disposés de part et d'autre d'une surface médiane P associée au guide optique concerné $g_k$, et de génératrice perpendiculaire au plan des couches. Les motifs alternés 15 et 16 présentent chacun une largeur L moitié de celle du guide $g_k$, soit dans l'exemple de réalisation décrit une largeur L égale à 2 μm. Dans les virages 19, la structure du rotateur $r_k$ est asymétrique, la largeur des motifs alternés n'étant plus égale à la moitié de la largeur du guide. Plus précisément, comme représenté sur les figures 3 et 7 et 8, la couche de confinement supérieure 9 est gravée, dans les portions courbes 19 de chaque guide $g_k$, de manière à réaliser une succession de motifs alternés 17, 18 disposés de part et d'autre d'une surface P' de génératrice perpendiculaire au plan des couches. Les motifs 18 situés du côté de la concavité du virage ont une largeur L" supérieure à la demi-largeur du guide, et les motifs 17 situés du côté opposé ont une largeur L'inférieure à la demi-largeur du guide. Dans les portions d'extrémité 12, la couche de confinement supérieure 9 s'étend sur toute la largeur du guide, égale à 3 μm dans l'exemple de réalisation décrit.

La longueur des motifs alternés 15, 16, 17 ou 18 est la même quel que soit le guide optique $g_k$ considéré. Cette longueur est égale à $\lambda(n_{TE} - n_{TM})$, où $n_{TE}$, $n_{TM}$ désignent les indices effectifs selon la polarisation et le type de structure concerné ; structure chargée du côté de la concavité du faisceau de guides ( par les motifs 16 et 18) ou structure chargée du côté opposé ( par les motifs 15 et 17). Chaque motif réalise une fraction de la rotation de polarisation nécessaire dans le guide optique concerné pour permuter les modes de polarisation TE et TM, de manière à avoir des chemins optiques parcourus par les modes de polarisation TE et TM égaux. Grâce à cette permutation des modes de polarisation TE et TM, les longueurs d'ondes centrales du filtre pour les modes de polarisation TE et TM sont égales :

$$\lambda_{0TE} = (n_{TE}\Delta L/2 + n_{TM} \Delta L/2) / m$$

$$\lambda_{0TM} = (n_{TM}\Delta L/2 + n_{TE}\Delta L/2) / m,$$

$\Delta L$ étant la différence de longueur entre deux guides optiques consécutifs ($g_{k+1}$ , $g_k$) du faisceau de guides optiques $g_1$, ..., $g_n$ et m l'ordre de diffraction.

Finalement, l'invention permet d'obtenir un filtre multilongueur d'onde insensible à la polarisation, pouvant être intégré au sein d'une structure monolithique avec d'autres composants optiques ou optoélectroniques (puisque les structures perturbatrices permettant d'obtenir les variations d'indice effectif des guides optiques sont réalisées dans les mêmes matériaux que le reste du filtre).

L'invention n'est pas limitée à l'exemple de réalisation qui vient d'être décrit. On peut notamment remplacer la structure de type diluée par une structure non diluée mais dont l'indice effectif serait proche de l'indice du substrat de façon à avoir une biréfringence faible (relativement au substrat).

**Revendications**

1. Filtre multilongueur d'onde (1) insensible à la polarisation, comprenant

   - une zone d'expansion d'entrée (2) connectée à au moins un guide optique d'entrée,
   - une zone d'expansion de sortie (3) connectée à au moins un guide optique de sortie;
   - un faisceau de guides optiques (g1, ..., gn) de longueurs respectives croissantes, reliant en parallèle lesdites zones d'expansion, chaque guide effectuant au moins un virage (19),

   lesdites zones d'expansion et ledit faisceau de guides étant réalisés sur un même substrat (4) et agencés de manière à ce que la réponse en longueur d'onde du filtre dépende des déphasages croissants subis par la lumière se propageant dans les guides respectifs,
   le filtre comprenant en outre des rotateurs de polarisation (r1, ..., rk) placés sur le trajet de la lumière dans les guides de manière à égaliser les chemins optiques totaux parcourus par les modes de polarisation TE et TM dans chacun des guides, **caractérisé en ce que** les rotateurs de polarisation (r1, ..., rk) sont du type comportant des moyens pour charger chaque guide et créer une asymétrie de l'indice de réfraction effectif de ce dernier, lesdits moyens de charge des guides étant constitués par une succession de motifs alternés (15, 16, 17, 18) s'étendant alternativement le long de l'un et l'autre bords longitudinaux de chacun desdits guides optiques, la portion des motifs alternés s'étendant dans le virage de chaque guide étant agencée de façon que les motifs (18) qui s'étendent le long du bord concave dudit virage ont une dimension transversale supérieure à celle des motifs (17) qui s'étendent le long du bord convexe.

2. Filtre selon la revendication 1, **caractérisé en ce que** le filtre comporte au niveau de chaque guide optique ($g_k$) l'empilement suivant de couches déposées par épitaxie :

   - un substrat (4),
   - une couche de confinement inférieure (5),
   - une couche de guidage inférieure (6), d'indice de réfraction supérieur à celui de la couche de confinement inférieure (5),
   - une couche de confinement intermédiaire (7), d'indice de réfraction inférieur à celui de la couche de guidage inférieure (6),
   - une couche de guidage supérieure (8), d'indice de réfraction supérieur à celui de la couche de confinement intermédiaire (7),
   - une couche de confinement supérieure (9), d'indice de réfraction inférieur à celui de la couche de guidage supérieure (8).

3. Filtre selon la revendication 2, **caractérisé en ce que** lesdits moyens pour charger chaque guide optique ($g_k$) sont réalisés par gravure de la couche de confinement supérieure (9).

4. Filtre selon l'une des revendications 2 à 3, **caractérisé en ce que** les couches de guidage inférieure (6) et supérieure (8) sont réalisées en matériau quaternaire InGaAsP, et les couches de confinement inférieure (5), intermédiaire (7) et supérieure (9) sont réalisées en matériau binaire InP.

5. Filtre selon la revendication 4, **caractérisé en ce que** lesdites couches de guidage (6, 8) ont chacune une épaisseur inférieure ou égale à 1500 Å.

6. Filtre selon l'une des revendications 4 et 5, **caractérisé en ce que** l'épaisseur totale des couches de confinement inférieure (5), de confinement intermédiaire (7), et de confinement supérieure (9) est de l'ordre de 3 μm.

7.  Filtre selon l'une des revendications 4 à 6, **caractérisé en ce que** le matériau quaternaire utilisé présente une longueur d'onde de bande interdite ($\lambda_g$) égale à 1,3 μm.

8.  Filtre selon l'une des revendications 1 à 7, **caractérisé en ce que** la biréfringence de chaque guide optique ($g_k$) est de l'ordre de $5 \cdot 10^{-3}$.

9.  Procédé pour réaliser un filtre multilongueur d'onde (1) insensible à la polarisation selon la revendication 2, **caractérisé en ce qu'**il comporte les étapes consistant à :

    - déposer par épitaxie sur le substrat (4) l'empilement desdites couches successives (5, 6, 7, 8, 9) pour constituer un coeur de guidage de la lumière,
    - graver sur ledit empilement les deux zones d'expansion d'entrée (2) et de sortie (3), le faisceau de guides optiques ($g_1$, ..., $g_n$) reliant lesdites zones d'expansion, lesdits au moins un guide d'entrée et au moins un guide de sortie, et la succession desdits motifs alternes (15, 16, 17, 18) destinés à charger chacun des guides optiques, avec la dimension transversale des motifs qui s'étendent le long du bord concave du virage de chaque guide supérieure à celle des motifs qui s'étendent le long du bord convexe.

**Patentansprüche**

1.  Polarisierungsunempfindliches Multiwellenlängenfilter (1), aufweisend:

    - eine Eingangsexpansionszone (2), die an mindestens einen Eingangslichtleiter angeschlossen ist,

    - eine Ausgangsexpansionszone (3), die an mindestens einen Ausgangslichtleiter angeschlossen ist,

    - ein Bündel von Lichtleitern (g1, ..., gn) jeweiliger halbmondförmiger Längen, die die Expansionszonen parallel verbinden, wobei jeder Lichtleiter mindestens eine Krümmung (19) ausführt,

    wobei die Expansionszonen und das Lichtleiterbündel auf ein und demselben Substrat (4) ausgeführt und derart angeordnet sind, dass das Ansprechen in der Wellenlänge des Filters von den halbmondförmigen Phasenverschiebungen abhängt, die durch das Licht durchgemacht werden, das sich in den jeweiligen Lichtleitern ausbreitet, wobei das Filter außerdem Polarisierungsrotatoren (r1, ..., rk) aufweist, die auf dem Lichtweg in den Lichtleitern derart angeordnet sind, dass sie die gesamten Strahlengänge bzw. optischen Weglängen egalisieren, die durch die Polarisierungsmodi TE und TM in einem jeden der Lichtleiter durchlaufen werden, **dadurch gekennzeichnet, dass** die Polarisierungsrotatoren (r1, ..., rk) vom Typ sind, aufweisend Mittel, um einen jeden Lichtleiter zu laden und eine Asymmetrie seines effektiven Brechungskoeffizienten zu erzeugen, wobei die Mittel zum Laden der Lichtleiter durch eine Aufeinanderfolge von wechselnden Motiven (15, 16, 17, 18) gebildet sind, die sich abwechselnd längs des einen und des anderen der Längsränder eines jeden der Lichtleiter erstrekken, wobei der Anteil der wechselnden Motive, der sich in der Krümmung eines jeden Lichtleiters erstreckt, derart angeordnet ist, dass die Motive (18), die sich längs des konkaven Rands der Krümmung erstrecken, eine größere transversale Ausdehnung haben als diejenige der Motive (17), die sich längs des konvexen Rands erstrecken.

2.  Filter nach Anspruch 1, **dadurch gekennzeichnet, dass** das Filter auf Höhe eines jeden Lichtleiters ($g_k$) folgende lagenweise Anordnung von durch Epitaxie aufgewachsenen Schichten aufweist:

    - ein Substrat (4),

    - eine Grundisolierschicht (5),

    - eine Grundführungsschicht (6) eines Brechungskoeffizienten, der größer ist als derjenige der Grundisolierschicht (5),

    - eine Zwischenisolierschicht (7) eines Brechungskoeffizienten, der kleiner ist als derjenige der Grundführungsschicht (6),

    - eine obenliegende Führungsschicht (8) eines Brechungskoeffizienten, der größer als derjenige der Zwischenisolierschicht (7) ist,

    - eine obenliegende Isolierschicht (9) eines Brechungskoeffizienten, der kleiner als derjenige der obenliegenden Führungsschicht (8) ist.

3.  Filter nach Anspruch 2, **dadurch gekennzeichnet, dass** die Mittel zum Laden eines jeden Lichtleiters ($g_k$) durch Ätzen der obenliegenden Isolierschicht (9) ausgeführt sind.

4.  Filter nach Anspruch 2 oder 3,

**dadurch gekennzeichnet, dass** die Grundführungsschicht (6) und die obenliegende Führungsschicht (8) in quaternärem Material InGaAsP ausgeführt sind, und die Grundisolierschicht (5), die Zwischenisolierschicht (7) und die obenliegende Isolierschicht (9) in binärem Material InP ausgeführt sind.

5.  Filter nach Anspruch 4,
    **dadurch gekennzeichnet, dass** die Führungsschichten (6, 8) jeweils eine kleinere Dicke oder eine Dicke gleich 1500 Å haben.

6.  Filter nach Anspruch 4 oder 5,
    **dadurch gekennzeichnet, dass** die Gesamtdicke der Grundisoiierschicht (5), der Zwischenisolierschicht (7) und der obenliegenden Isolierschicht (9) einer Größenordnung von 3 µm ist.

7.  Filter nach einem der Ansprüche 4 bis 6,
    **dadurch gekennzeichnet, dass** das genutzte quaternäre Material eine Wellenlänge eines Bandabstands bzw. verbotenen Energiebands ($\lambda_g$) gleich 1,3 µm aufweist.

8.  Filter nach einem der Ansprüche 1 bis 7,
    **dadurch gekennzeichnet, dass** die Doppelbrechung eines jeden Lichtleiters ($g_k$) einer Größenordnung von $5 \cdot 10^{-3}$ ist.

9.  Verfahren zum Ausführen eines polarisierungsunempfindlichen Multiwellenlängenfilters (1) nach Anspruch 2,
    **dadurch gekennzeichnet, dass** es die Schritte aufweist, die darin bestehen:

    -   durch Epitaxie auf das Substrat (4) die lagenweise Anordnung der aufeinanderfolgenden Schichten (5, 6, 7, 8, 9) aufzuwachsen, um einen Kern zur Führung des Lichts zu bilden,

    -   auf die lagenweise Anordnung die beiden Expansionszonen, die Eingangsexpansionszone (2) und die Ausgangsexpansionszone (3) zu ätzen, wobei das Bündel von Lichtleitern ($g_1$, ..., $g_n$) die Expansionszonen, mindestens einen Eingangslichtleiter und mindestens einen Ausgangslichtleiter und die Aufeinanderfolge der wechselnden Motive (15, 16, 17, 18), die dazu bestimmt sind, einen jeden der Lichtleiter zu laden, mit der transversalen Ausdehnung der Motive verbindet, die sich längs des konkaven Rands der Krümmung eines jeden Lichtleiters erstrecken, die größer als diejenige der Motive ist, die sich längs des konvexen Rands erstrecken.

**Claims**

1.  A multi-wavelength filter (1) that is insensitive to polarization, comprising:

    an inlet expansion zone (2) connected to at least one inlet optical waveguide;
    an outlet expansion zone (3) connected to at least one outlet optical waveguide;
    a bundle of optical waveguides ($g_1$, ..., $g_n$) of respective increasing lengths, interconnecting said expansion zones in parallel, each waveguide traveling around at least one bend (19);
    said expansion zones and said bundle of waveguides being made on a common substrate (4) and organized in such a manner that the wavelength response of the filter depends on the increasing phase shifting to which the light propagating in the respective waveguides is subject,
    the filter further comprising polarization rotators ($r_1$, ..., $r_n$) placed on the path of the light in the waveguides in such a manner as to equalize the total optical path lengths traveled by the TE and TM polarization modes in each of the waveguides, the filter being **characterized in that** the polarization rotators ($r_1$, ..., $r_n$) are of the type including means for loading each optical waveguide and for creating asymmetry in the effective refractive index thereof, said means for loading the waveguides being constituted by a succession of alternating patterns (15, 16, 17, 18) extending in alternation along both longitudinal edges of each of said optical waveguides, the portion of the alternating patterns that extends in the bend of each waveguide being organized in such a manner that the patterns (18) which extend along the concave side of said bend have a transverse dimension that is greater than that of the patterns (17) which extend along the convex side.

2.  A filter according to claim 1, **characterized in that** each optical waveguide ($g_k$) of the filter comprises the following stack of layers deposited by epitaxy:

    a substrate (4);
    a bottom confinement layer (5);
    a bottom guide layer (6) of refractive index greater than that of the bottom confinement layer (5);
    an intermediate confinement layer (7) of refractive index lower than that of the bottom guide layer (6);
    a top guide layer (8) of refractive index greater than that of the intermediate confinement layer (7); and

a top confinement layer (9) of refractive index less than that of the top guide layer (8).

3. A filter according to claim 2, **characterized in that** said means for loading each optical waveguide ($g_k$) are implemented by etching the top confinement layer (9).

4. A filter according to claim 2 or 3, **characterized in that** the bottom and top guide layers (6, 8) are made of InGaAsP quaternary material, and the bottom, intermediate, and top confinement layers (5, 7, and 9) are made of InP binary material.

5. A filter according to claim 4, **characterized in that** the thickness of each guide layer (6, 8) is less than or equal to 1500 Å.

6. A filter according to claim 4 or 5, **characterized in that** the total thickness of the bottom, intermediate, and top confinement layers (5, 7, and 9) is about 3 μm.

7. A filter according to any one of claims 4 to 6, **characterized in that** the quaternary material used has a forbidden band wavelength ($\lambda_g$) equal to 1.3 μm.

8. A filter according to any one of claims 1 to 7, **characterized in that** the birefringence of each optical waveguide ($g_k$) is about $5 \times 10^{-3}$.

9. A method according to claim 2 for making a multi-wavelength filter (1) that is insensitive to polarization, the method being **characterized in that** it comprises the following steps:

    the stack of said successive layers (5, 6, 7, 8, 9) is deposited by epitaxy on the substrate (4) to constitute a core for guiding light; and
    the following are etched on said stack: the inlet and the outlet expansion zones (2, 3); the bundle of optical waveguides ($g_1$, ..., $g_n$) interconnecting said expansion zones; said at least one inlet waveguide and said at least one outlet waveguide; and the succession of said alternating patterns (15, 16, 17, 18) for loading each of the optical waveguides, with the transverse dimension of the patterns which extend along the concave side of the bend of each waveguide being greater than that of the patterns which extend along the convex side.

*FIG.1*

*FIG.2*

*FIG.3*

*FIG.4*

*FIG.5*

*FIG.6*

*FIG.7*

*FIG.8*

*FIG.9*